# FASCICULE DE BREVET EUROPEEN

(11) **EP 0 622 810 B1**
(45) Date de publication et mention de la délivrance du brevet: **13.11.1996**
(21) Numéro de dépôt: 94400521.4
(22) Date de dépôt: 09.03.1994
(51) Int. Cl.: G21C 17/017, G21C 19/02

(54) **Procédé et dispositif de réparation et de protection contre la fissuration de la paroi interne d'un tube de traversée du fond de la cuve d'un réacteur nucléaire à eau sous pression**
Verfahren und Einrichtung zur Wiederherstellung und zum Rissebildungsschutz der Innenwand eines Durchführungsrohrs im Druckgefässboden eines Druckwasserkernreaktors
Method and installation for repairing and preventing cracking of the inner surface of a vessel bottom penetration pipe of a pressurized water nuclear reactor

(30) Priorité: 29.04.1993 FR 9305097
(43) Date de publication de la demande: 02.11.1994
(73) Titulaire: FRAMATOME, 92400 Courbevoie (FR)
(72) Inventeur: Michaut, Bernard, F-69003 Lyon (FR); Pellegrin, Bernard, F-69720 Saint Laurent de Mure (FR); Voisembert, Sylvie, F-38540 Heyrieux (FR)
(74) Mandataire: Bouget, Lucien

(56) Documents cités:
- EP-A- 0 291 373
- FR-A- 2 565 323
- FR-A- 2 585 817
- FR-A- 2 652 191
- FR-A- 2 656 458
- FR-A- 2 676 140
- PATENT ABSTRACTS OF JAPAN vol. 4, no. 77 (C-013) 4 Juin 1980 & JP-A-55 041 963

## Description

L'invention concerne un procédé et un dispositif de réparation et de protection contre la fissuration de la paroi interne d'un tube de traversée du fond de la cuve d'un réacteur nucléaire à eau sous pression.

Les réacteurs à eau sous pression comportent une cuve de forme générale cylindrique qui contient le coeur du réacteur et qui est disposée avec son axe vertical dans un puits de cuve débouchant par son extrémité supérieure dans une piscine.

La cuve comporte un couvercle de fermeture à sa partie supérieure et un fond bombé à sa partie inférieure qui est traversé par une pluralité de tubes sensiblement verticaux appelés pénétrations de fond de cuve.

Ces pénétrations de fond de cuve comportent une extrémité saillante à l'intérieur de la cuve du réacteur et une extrémité opposée en saillie sous le fond bombé qui est reliée à un conduit de mesure souple permettant de joindre le fond de la cuve à une salle d'instrumentation disposée dans la structure du bâtiment du réacteur, généralement dans une position adjacente par rapport au puits de cuve.

Chacun des conduits de mesure et la pénétration de fond de cuve correspondante assure le passage d'un doigt de gant dans lequel se déplace une sonde de mesure fixée à l'extrémité d'un élément flexible de grande longueur et son introduction à l'intérieur de la cuve et du coeur pour effectuer des mesures, par exemple des mesures de flux neutronique ou de température, à l'intérieur du coeur pendant le fonctionnement du réacteur.

Les tubes de traversée du fond de cuve sont généralement en alliage de nickel et sont fixés par soudure sur le fond bombé de la cuve qui est généralement en un acier à haute résistance.

La surface interne des pénétrations de fond de cuve est en contact, pendant le fonctionnement du réacteur, avec le fluide primaire du réacteur constitué par de l'eau sous pression renfermant divers additifs.

On a observé une certaine tendance à la fissuration de la surface interne des pénétrations de fond de cuve, en particulier au voisinage de la zone dans laquelle le tube de traversée est fixé par soudure sur le fond de cuve.

Il peut être nécessaire d'effectuer des réparations de la surface interne des pénétrations, après un certain temps de fonctionnement du réacteur et il est de toutes façons avantageux de traiter préventivement cette surface interne, pour éviter ou pour retarder la fissuration de la paroi interne des pénétrations pendant le fonctionnement du réacteur.

Dans le cas d'éléments tubulaires qui peuvent être soumis à la corrosion sous tension et à la fissuration en contact avec le fluide primaire d'un réacteur, par exemple dans le cas des tubes des générateurs de vapeur des réacteurs nucléaires à eau sous pression, on a prévu des méthodes de réparation ou des procédés de traitement préventif de la paroi interne des éléments tubulaires qui permettent d'allonger leur durée de vie et d'améliorer la sécurité du réacteur nucléaire.

On a ainsi envisagé, dans le cas des tubes de générateurs de vapeur qui comportent une zone de transition entre une partie déformée et une partie non déformée, au voisinage de la face supérieure de la plaque tubulaire dans laquelle sont fixés ces tubes, d'effectuer un traitement de leur paroi interne, dans la zone de transition, par exemple par expansion mécanique, détensionnement thermique ou martelage par des petites billes (microbillage).

Dans le cas où des fissures sont apparues, on peut également réaliser une réparation par manchonnage du tube dans la zone de transition.

On a également proposé dans des demandes de brevets FR-A-2 565 323, FR-A-2 585 817, FR-A-2 615 207 et FR-A-2 652 191 de la Société FRAMATOME, des procédés et dispositifs pour réaliser un dépôt de métal par électrolyse, sur la surface intérieure des tubes de générateurs de vapeur dans la zone de transition. Ce traitement permet d'éviter un contact entre l'eau primaire de refroidissement du réacteur et la zone de transition sensible à la corrosion sous tension et à la fissuration.

L'opération de revêtement est réalisée après avoir vidé entièrement le générateur de vapeur de l'eau qu'il contient et mis la partie primaire et la partie secondaire en air. Un tel mode opératoire ne peut être envisagé dans le cas des traversées de fond de cuve.

Le métal déposé par électrolyse est généralement du nickel pur, les tubes de générateur de vapeur étant en un alliage à base de nickel renfermant une proportion de l'ordre de 75 % de nickel.

On ne connaissait pas jusqu'ici de procédé permettant d'effectuer la réparation et la protection contre la fissuration de la paroi interne des pénétrations de fond de cuve d'un réacteur nucléaire, après un certain temps de fonctionnement du réacteur.

L'invention est donc de proposer un procédé de réparation et de protection contre la fissuration de la paroi interne d'un tube de traversée du fond d'une cuve d'un réacteur nucléaire à eau sous pression, la cuve de forme générale cylindrique étant disposée avec son axe vertical dans un puits de cuve débouchant par son extrémité supérieure dans une piscine et comportant un couvercle et un fond bombé traversé par une pluralité de tubes sensiblement verticaux reliés chacun à une salle d'instrumentation du réacteur, par un conduit de mesure assurant le passage d'une sonde de mesure dans le coeur du réacteur qui est disposé à l'intérieur de la cuve, ce procédé pouvant être mis en oeuvre soit pour effectuer des réparations, soit à titre préventif, et sans exposer le personnel chargé de l'intervention à des rayonnements provenant de la cuve du réacteur.

Dans ce but, pendant une période d'arrêt du réacteur nucléaire, le couvercle de la cuve et les équipements internes inférieurs et supérieurs de la cuve étant démontés et la cuve et la piscine étant remplies d'eau, on réalise depuis le niveau supérieur de la piscine et sous eau,
- la mise en place d'une perche comportant suivant sa longueur un conduit de guidage et, à l'une de ses extrémités, un embout, dans une disposition verticale à l'intérieur de la cuve de manière que l'embout vienne reposer sur l'extrémité supérieure du tube de traversée du fond de cuve, le conduit de guidage se trouvant dans le prolongement axial du tube de traversée du fond de cuve,
- l'introduction d'une canne de revêtement électrolytique reliée par l'intermédiaire d'un ensemble de conduits et de câbles d'alimentation à un module d'électrolyse et comprenant une électrode tubulaire intercalée entre deux joints d'étanchéité expansibles radialement et commandés à distance, à l'intérieur du tube de traversée, par l'intermédiaire du conduit de guidage et de l'embout, jusqu'à une zone d'intervention à l'intérieur du tube de traversée, ayant une longueur et une position définie dans le tube de traversée,
- l'isolation de la zone d'intervention à l'intérieur du tube par expansion des joints d'étanchéité de la canne de revêtement électrolytique expansibles commandés à distance,
- le remplissage par un électrolyte de la zone isolée, et
- l'alimentation de l'électrode tubulaire en courant électrique pour faire passer le courant d'électrolyse à travers l'électrolyte et déposer une couche métallique de revêtement électrolytique sur la surface interne du tube dans la zone isolée.

L'invention est également relative à un dispositif pour effectuer la mise en oeuvre du procédé.

On va maintenant décrire, à titre d'exemple non limitatif, en se référant aux figures jointes en annexe, un exemple de mise en oeuvre du procédé suivant l'invention et les dispositifs utilisés pour cette mise en oeuvre.

La figure 1 est une vue en perspective éclatée d'une partie du bâtiment d'un réacteur nucléaire à eau sous pression.

La figure 2 est une vue en coupe à grande échelle d'une traversée de fond de cuve du réacteur nucléaire représenté sur la figure 1.

La figure 3 est une vue schématique en élévation et en coupe verticale d'une installation pour la mise en oeuvre du procédé suivant l'invention.

La figure 4 est une vue à plus grande échelle d'une partie du dispositif représenté sur la figure 3.

La figure 5 est une vue plus détaillée en élévation et en coupe d'une partie du dispositif représenté sur la figure 4.

Les figures 6A à 6E sont des vues schématiques montrant le dispositif de revêtement électrolytique pendant des phases successives d'une opération de revêtement à l'intérieur d'une traversée de fond de cuve.

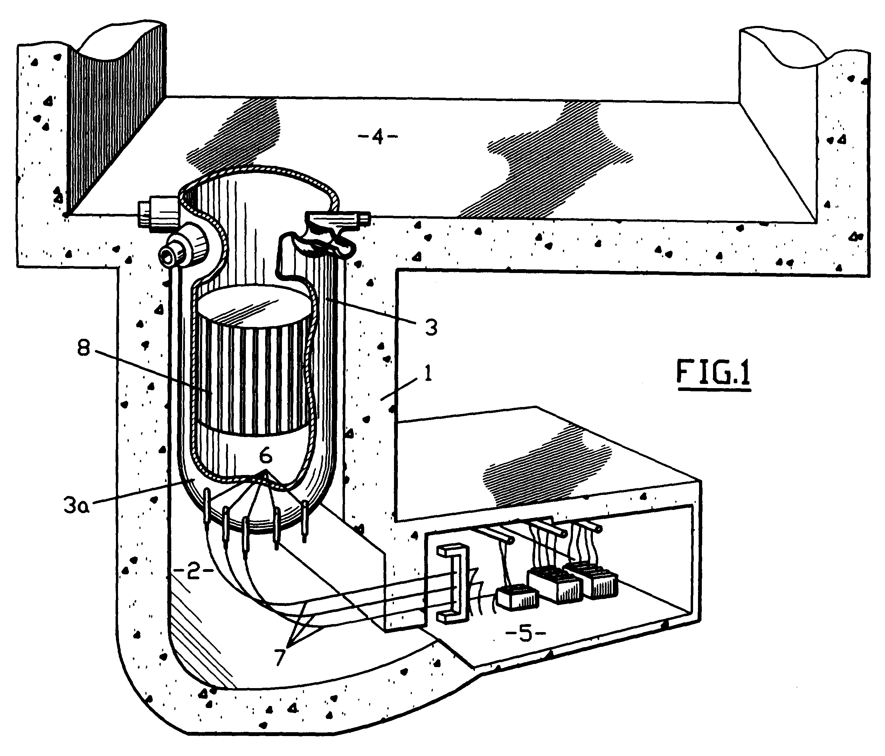

Sur la figure 1, on voit une partie de la structure 1 en béton d'un réacteur nucléaire délimitant un puits de cuve 2 dans lequel est disposée la cuve 3 du réacteur nucléaire, une piscine 4 dans laquelle le puits 2 débouche par sa partie supérieure et une salle d'instrumentation 5 dans une position adjacente par rapport au puits de cuve 2.

La cuve 3 de forme générale cylindrique comporte un fond bombé 3a traversé par des pénétrations de fond de cuve 6 qui sont reliées chacune, à l'extérieur de la cuve 3, en-dessous du fond 3a, à un tube de guidage d'instrumentation 7 assurant une liaison entre le fond 3a de la cuve et la salle d'instrumentation 5 du réacteur.

A l'intérieur de chacun des tubes de guidage 7, on peut introduire et déplacer depuis la salle d'instrumentation 5, une sonde de mesure fixée à l'extrémité d'un élément souple de grande longueur, de manière à introduire la sonde de mesure à l'intérieur de la cuve 3 et dans le coeur 8 du réacteur disposé à l'intérieur de la cuve 3, pour effectuer des mesures, par exemple des mesures de flux neutroniques ou de température pendant le fonctionnement du réacteur.

Les signaux de mesure sont transmis par la sonde qui peut être déplacée à l'intérieur du coeur, dans la salle d'instrumentation 5 où ces signaux de mesure sont recueillis et traités par des unités de mesure.

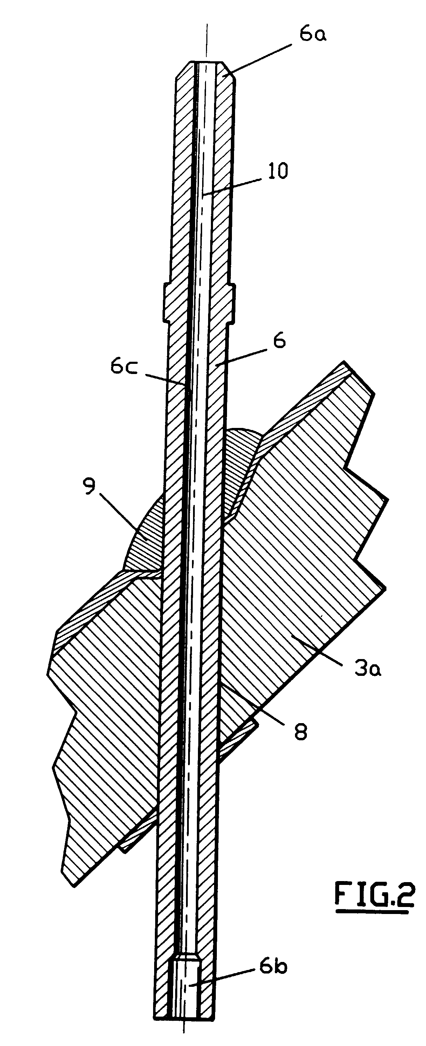

Sur la figure 2, on voit une partie du fond bombé 3a de la cuve du réacteur nucléaire, au niveau d'une pénétration de fond de cuve 6 qui est constituée par un tube de traversée engagé pratiquement sans jeu dans une ouverture traversant le fond de cuve et soudée sur le fond de cuve, au niveau de sa face interne, par l'intermédiaire d'un joint 9 en métal d'apport déposé dans un chanfrein dans lequel débouche l'ouverture.

Le tube de traversée 6 comporte une partie saillante à l'intérieur de la cuve du réacteur nucléaire, au-dessus du fond de cuve 3a dont l'extrémité 6a est chanfreinée, sous la forme d'une surface tronconique.

L'extrémité inférieure 6b du tube de traversée 6 disposée à l'extérieur de la cuve, en-dessous du fond 3a, comporte un alésage élargi diamétralement par rapport à l'alésage de la partie courante du tube 6. Cet alésage élargi permet le montage du tube de guidage 7 à l'intérieur du tube de traversée 6. Le tube de guidage 7 est soudé à l'extrémité inférieure du tube 6.

L'axe 10 de l'ouverture et du tube 6 de la traversée a une direction verticale.

Après un certain temps de fonctionnement du réacteur nucléaire, la surface interne 6c du tube 6 est susceptible de comporter des fissures ou amorces de fissure, principalement dans la zone voisine du cordon de soudure 9.

De telles fissures ou amorces de fissure peuvent être détectées à l'aide d'une sonde à courants de Foucault qui est introduite dans l'alésage intérieur de la traversée 6, pendant une période d'arrêt du réacteur nucléaire, le couvercle de la cuve étant enlevé et la cuve et la piscine étant remplies d'eau.

Dans le cas où l'on détecte des fissures sur la paroi interne 6c d'une traversée 6, la réparation peut être effectuée en utilisant le procédé suivant l'invention.

Il peut être avantageux également d'effectuer le traitement suivant l'invention, sur toute les traversées 6 du fond de la cuve 3, à titre préventif.

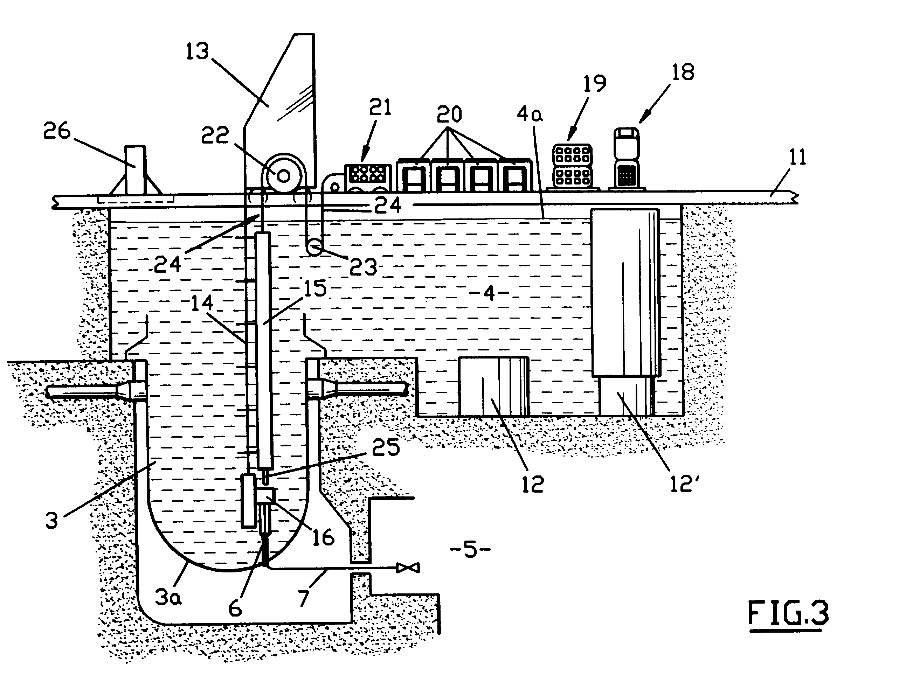

Dans tous les cas, on peut utiliser une installation d'intervention telle que représentée sur la figure 3.

L'intervention est effectuée pendant une période d'arrêt du réacteur nucléaire, le couvercle de la cuve 3 étant enlevé et par exemple déposé sur un stand de réception sur le fond de la piscine 4 qui est remplie d'eau jusqu'à un niveau 4a, légèrement en-dessous du bord supérieur 11 de la piscine.

Après enlèvement du couvercle, on utilise le pont polaire de la centrale nucléaire, pour assurer le soulèvement et l'extraction de la cuve 3, d'équipements internes supérieurs du réacteur disposés au-dessus du coeur, ces équipements internes supérieurs étant déposés sur un stand de stockage 12 dans la piscine du réacteur.

On effectue ensuite le déchargement des assemblages du coeur qui sont transportés dans une piscine de stockage.

On réalise ensuite le démontage et le transport des équipements internes inférieurs du réacteur qui sont déposés sur un stand de stockage 12' dans le fond de la piscine.

On peut alors accéder par le dessus, aux extrémités supérieures 6a des traversées de fond de cuve 6.

L'installation permettant de mettre en oeuvre le procédé suivant l'invention, représentée sur la figure 3, comporte une partie fixe reposant sur un plancher au niveau supérieur 11 de la piscine et une partie mobile qui peut être fixée par exemple sur la machine de chargement 13 du réacteur qui se déplace sur des rails reposant sur le plancher au niveau du bord supérieur 11 de la piscine.

La partie mobile de l'installation comporte en particulier une perche verticale 14 fixée à sa partie supérieure au chariot de la machine de chargement 13 et un conduit de guidage vertical 15 fixé le long de la perche 14.

La perche 14 porte de plus, à sa partie inférieure, dans le prolongement axial du conduit de guidage 15, un embout de guidage et d'introduction 16 qui peut être placé par la perche 14, de manière à venir reposer sur la partie d'extrémité supérieure 6a d'une pénétration de fond de cuve 6 quelconque traversant le fond 3a de la cuve 3.

Par déplacement du chariot de la machine de chargement 13 et de la perche qui est fixée sur un ensemble de manutention reposant sur le chariot de la machine de chargement 13, on peut atteindre une pénétration 6 dans une position quelconque sur le fond 3a de la cuve 3.

Le dispositif tel que représenté peut servir dans un premier temps à effectuer le contrôle des pénétrations, en introduisant un dispositif de contrôle à sonde à courants de Foucault à l'intérieur de l'alésage de la pénétration 6 par l'intermédiaire du conduit 15 et de l'embout 16.

Les informations données par la sonde à courants de Foucault sont traitées au niveau d'un poste de contrôle et de commande 18 constituant une partie fixe de l'installation reposant sur le plancher au niveau du bord supérieur 11 de la piscine 4.

La partie fixe de l'installation comporte, en plus du poste de contrôle et de commande 18, un groupe 19 d'alimentation électrique, quatre groupes de pompage et de chauffage 20 des produits utilisés pour le revêtement électrolytique et une unité de commande 21 rassemblant les vannes de commande du dispositif de revêtement électrolytique.

L'installation comporte également un enrouleur 22 porté par le chariot 13 de la machine de chargement et un accumulateur de câbles 23, l'enrouleur 22 et l'accumulateur 23 permettant de déplacer un ensemble de grande longueur 24 comportant une enveloppe tubulaire ou ombilic renfermant des conduits et des câbles d'alimentation et de mesure et un câble de traction assurant le déplacement de l'ombilic qui est relié à son extrémité à une canne de revêtement électrolytique 25.

L'installation représentée sur la figure 3 comporte également un poste de contrôle 26 reposant sur le plancher au niveau supérieur 11 de la piscine et pouvant être immergé au fond de la cuve ou de la piscine.

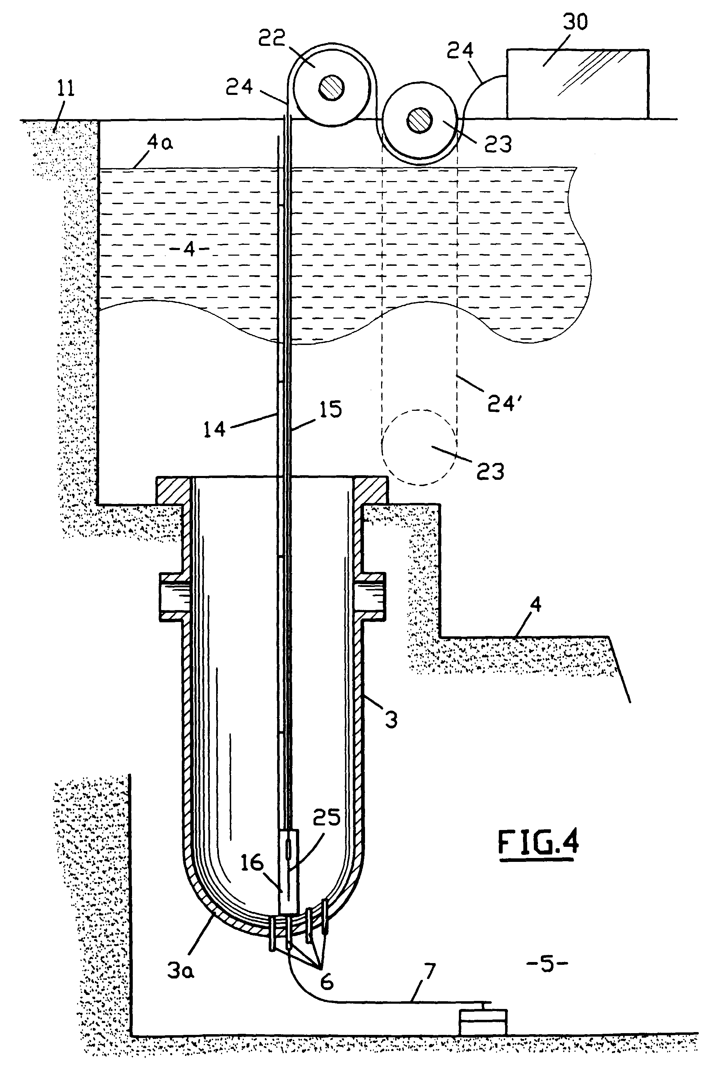

Comme il est visible sur la figure 4, l'ombilic 24 est relié à sa partie inférieure à une canne d'électrolyse 25 et à son extrémité opposée, au niveau du bord supérieur 11 de la piscine, à un module de revêtement électrolytique 30 rassemblant les divers groupes et unités 18, 19, 20 et 21 représentés sur la figure 3.

Le module 30 permet, par l'intermédiaire de l'ombilic 24, d'alimenter la canne 25, en liquide électrolyte, en fluide de commande des joints d'étanchéité et en courant d'électrolyse, en particulier.

Lorsque la canne 25 est remontée à l'intérieur du tube de guidage 15, la longueur supplémentaire 24' de l'ombilic 24 est stockée par le dispositif accumulateur 23, comme représenté de manière schématique en pointillés.

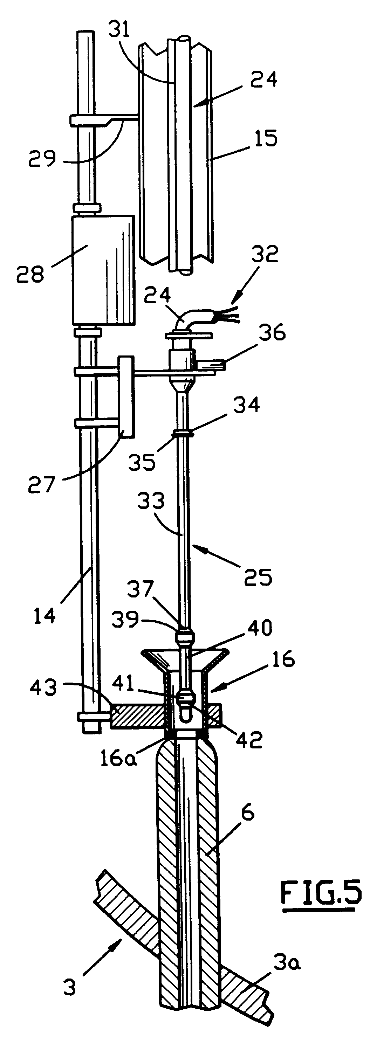

Comme il est visible sur la figure 5, la perche 14 porte la canne d'électrolyse 25, par l'intermédiaire d'une platine 27 qui est montée glissante dans la direction axiale, sur la partie inférieure de la perche 14 et qui peut être déplacée dans la direction verticale dans un sens et dans l'autre par une motorisation 28 de montée et de descente de la platine 27.

Le conduit de guidage 15 est fixé sur la perche 14, dans une disposition parallèle à celle-ci, par des moyens de support tels que 29 répartis suivant la longueur de la perche.

L'ombilic 24 passe à l'intérieur du conduit de guidage 15 dans lequel il est disposé suivant la direction axiale. Un câble de traction 31 est accolé à l'ombilic 24, de manière à assurer la remontée de l'ombilic à l'intérieur du conduit de guidage 15, lors de la remontée de la canne jusqu'au niveau supérieur de la piscine, par exemple pour assurer le changement de l'électrode de la canne 25.

Comme il est visible dans la partie supérieure de la canne 25 sur la figure 5, l'ombilic 24 assure le passage d'un ensemble de câbles et de conduites d'alimentation 32 comportant un câble d'alimentation électrique de l'électrode, les conduits d'alimentation en azote sous pression de vérins de serrage des joints d'étanchéité de la canne et des conduits d'alimentation et de circulation du liquide électrolyte.

La canne 25 est réalisée sous une forme tubulaire et comporte différents tronçons raccordés bout à bout, suivant la longueur de la canne.

Un premier tronçon 33 est constitué par un conduit souple sur lequel est engagée et fixée extérieurement une butée réglable 34 munie d'un joint annulaire 35 sur sa partie inférieure et qui est reliée à sa partie supérieure à une pièce de verrouillage 36 permettant la fixation de la canne 25 sur la platine mobile 27.

La partie supérieure de la canne 25 est reliée, à sa partie supérieure, au-dessus de la pièce de verrouillage 36, à l'ombilic 24 permettant le branchement électrique et le raccordement des conduits de fluide à différents canaux passant à travers la canne 25 sur toute sa longueur.

Le conduit souple 33 de la canne 25 est relié, à sa partie inférieure, à un ensemble de raccordement et d'étanchéité 37 comportant un joint annulaire expansible radialement 39. L'ensemble de raccordement et d'étanchéité 37 est lui-même relié à l'électrode 40 de la canne 25 constituée sous la forme d'une pièce métallique tubulaire raccordée à son extrémité inférieure à un ensemble 41 de fermeture et d'étanchéité comportant un joint 42 expansible radialement et terminé par une ogive.

Les ensembles d'étanchéité 37 et 41 comportent deux pièces de serrage entre lesquelles sont intercalés les joints 39 et 42 respectivement.

Les pièces de serrage des joints 39 et 42 sont mobiles l'une par rapport à l'autre dans la direction axiale et permettent le serrage dans la direction axiale et l'expansion radiale des joints 39 et 42 de manière à assurer l'étanchéité dans l'alésage de la traversée de fond de cuve.

Les pièces de serrage des joints 39 et 42 peuvent être commandées dans le sens du serrage par un dispositif constituant un vérin pneumatique alimenté en azote comprimé par des conduites passant dans l'ombilic 24 et dans le sens du desserrage, par des ressorts hélicoïdaux.

La dilatation et la rétraction radiale des joints peuvent donc être commandées à distance, depuis le niveau supérieur de la piscine, par l'intermédiaire du poste de commande 18 et de l'unité de commande 21 comportant des électrovannes intercalées sur un circuit d'azote sous pression.

L'embout de guidage et d'introduction 16 de la canne 14 est fixé à l'extrémité de la canne, par l'intermédiaire d'un support 43.

L'embout 16 comporte une ouverture d'engagement sensiblement tronconique à sa partie inférieure garnie intérieurement d'un joint d'étanchéité 16a destiné à venir en contact avec la partie supérieure 6a de la pénétration de fond de cuve 6, lors de la mise en place de la canne de revêtement électrolytique et une extrémité supérieure d'entrée évasée.

L'électrode 40 de forme tubulaire de la canne 25 est percée d'ouvertures d'entrée et de sortie de fluide électrolyte dans sa paroi latérale, ces ouvertures étant reliées à des conduits annulaires internes de la canne 25 reliés au circuit d'électrolyte comportant des conduits passant à l'intérieur de l'ombilic 24.

La pièce tubulaire métallique constituant la partie externe de l'électrode 40 est reliée au câble électrique d'alimentation, de manière à établir un champ électrique et à faire circuler un courant d'électrolyse entre l'électrode 40 et la surface interne du tube de traversée 6, lorsque la canne 25 est mise en position à l'intérieur du tube de traversée 6 pour réaliser une opération de revêtement électrolytique.

La platine porte-outils 27 est montée glissante dans la direction axiale sur la partie inférieure de la perche 14 et peut être entraînée en translation dans la direction axiale, dans un sens et dans l'autre pour réaliser l'introduction de la canne 25 dans le tube de traversée 6 et le retrait de la canne 25, respectivement. Ces déplacements peuvent être obtenus grâce à une vis disposée dans la direction longitudinale de la perche venant en prise avec un écrou porté par la platine 27 et entraînée en rotation par la motorisation de montée et de descente de la platine 28.

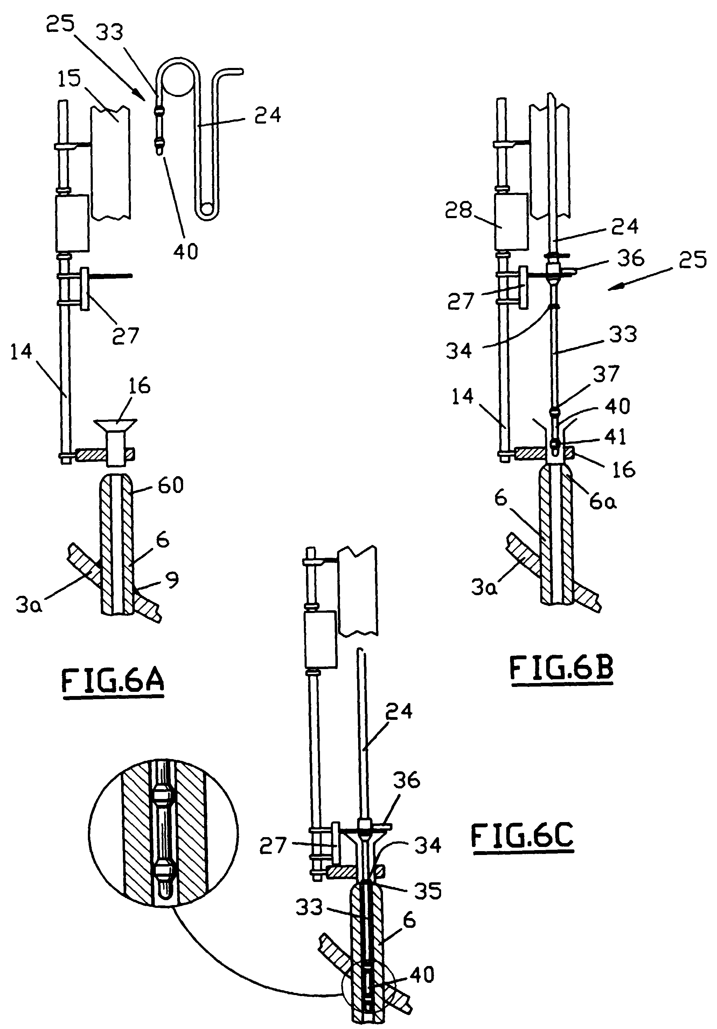

On va maintenant se reporter aux figures 6A à 6E pour décrire une opération de revêtement électrolytique à l'intérieur d'un tube de traversée 6 du fond de la cuve 3a.

Préalablement à l'opération de revêtement électrolytique proprement dite, on réalise un brossage de la surface intérieure du tube de traversée 6, dans la zone dans laquelle on doit réaliser le traitement de réparation et/ou de protection, cette zone étant généralement voisine de la soudure 9 du tube de traversée sur le fond de cuve 3a et ayant une longueur axiale de l'ordre de 150 mm. On effectue un brossage de la surface intérieure du tube de traversée 6, dans une zone de longueur de 160 mm recouvrant entièrement la zone de longueur 150 mm dans laquelle on doit réaliser le traitement de réparation ou de protection.

Pour effectuer cette opération de brossage, on utilise un outil motorisé comportant une brosse cylindrique fixée sur l'axe d'un moteur qui peut être mis en place soit en utilisant la perche 14, le conduit de guidage 15 et l'embout 16, soit un dispositif indépendant, qui peut être mis en place sur la partie supérieure 6a du tube de traversée 6, en utilisant un moyen de levage et de manutention de la machine de chargement ou le pont du réacteur nucléaire.

Lorsqu'un brossage suffisant a été effectué à l'intérieur du tube de traversée 6, dans la zone à traiter, l'outil de brossage est extrait de la traversée 6 et ramené au niveau supérieur de la piscine.

On met alors en place dans la piscine la perche 14, comme représenté sur la figure 6A, de manière que l'embout de guidage et d'introduction 16 se trouve au-dessus et à l'aplomb du tube de traversée 6 du fond de cuve 3a.

On raccorde à l'extrémité de l'ombilic 24 une canne de soudage 25 comportant le conduit souple 33 et l'électrode 40. Les câbles et conduits passant dans l'ombilic 24 sont reliés à la canne 25 de manière à assurer l'alimentation de l'électrode en courant électrique et en électrolyte.

Comme il est visible sur la figure 6B, on réalise ensuite la mise en place de l'embout 16 sur l'extrémité 6a du tube de traversée 6, en descendant la perche 14 de la hauteur voulue. L'embout 16 d'introduction et de guidage vient en contact avec l'extrémité supérieure 6a du tube de traversée par l'intermédiaire du joint d'étanchéité 16a disposé à l'intérieur de sa partie évasée inférieure.

La position de la butée 34 est réglée à la hauteur voulue, de manière à introduire l'électrode 40 dans la partie du tube 6 où l'on doit réaliser le traitement.

La canne 25 est fixée par l'intermédiaire de la pièce de verrouillage 36 sur la platine 27.

La motorisation 28 de la platine 27 est mise en fonctionnement dans le sens de la descente de la platine 27 qui entraîne la canne 25 vers le bas à l'intérieur de l'embout d'introduction et de guidage 16 comportant une extrémité supérieure évasée, puis à l'intérieur de l'alésage du tube de traversée 6, comme représenté sur la figure 6C.

A la fin du mouvement de descente de la canne 25, la butée 34 vient reposer sur l'extrémité supérieure du tube de traversée 6, par l'intermédiaire de son joint d'étanchéité 35.

L'introduction de la canne 25 à l'intérieur du tube de traversée 6 est facilitée par le fait que la canne 25 comporte une partie souple 33 susceptible de s'adapter, dans le cas d'un défaut d'orientation du tube de traversée 6, par rapport à la direction verticale.

La platine 27 maintient fermement la butée 34 contre l'extrémité du tube de traversée 6, de sorte que le joint 35 assure une fermeture étanche de l'espace annuentre la canne 25 et l'alésage du tube de traversée 6. La partie supérieure du conduit 33 entre la pièce de verrouillage 36 et la butée 34 présente une rigidité suffisante pour qu'on assure un appui efficace du joint d'étanchéité 35.

On envoie alors dans le circuit d'alimentation en électrolyte de la canne 25, de l'azote sous pression qui est éjecté par les ouvertures de l'électrode 40 à l'intérieur du tube de traversée 6. L'azote sous pression assure le soufflage de l'eau contenue dans le tube de traversée 6 et dans le tube de guidage correspondant 7 débouchant dans la salle d'instrumentation 5. L'eau chassée du tube de traversée 6 et du tube de guidage 7 est recueillie dans la salle d'instrumentation et déversée dans un récipient de recueil des effluents liquides de la centrale.

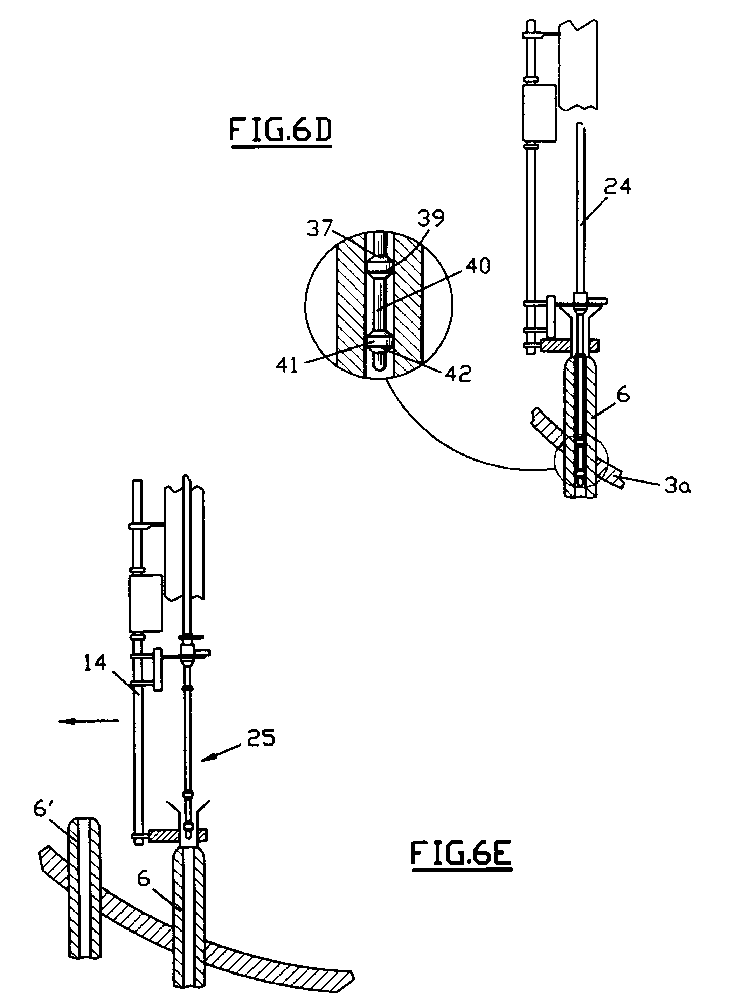

Comme représenté sur la figure 6D, on réalise alors le serrage axial entraînant une expansion radiale des joints 39 et 42 par l'intermédiaire des ensembles de serrage correspondants 37 et 41. On isole ainsi une zone annulaire autour de l'électrode 40 sur toute la longueur de la zone à traiter, au voisinage de la soudure 9 du tube 6. Cette zone dont la position est parfaitement réglée grâce à la butée 34 présente une longueur entre les joints 39 et 42, de l'ordre de 150 mm.

On alimente alors le circuit de circulation de l'électrolyte de la canne 25 en un électrolyte dont le produit actif est constitué par du sulfamate de nickel, dans le cas du traitement d'une traversée en alliage de nickel et qui est chauffé à une température de l'ordre de 50 à 70°C. On alimente l'électrode 40 en courant d'électrolyse, de manière à déposer une couche de nickel sur la surface intérieure du tube de traversée 6, entre les joints 39 et 42.

Les paramètres de l'électrolyse sont réglés préalablement à l'opération de revêtement, au niveau du poste de contrôle 26.

Il est possible d'opérer en plusieurs étapes, avec une circulation de bains électrolytiques différents au cours d'une première étape de réalisation d'une couche préalable et d'une seconde étape de dépôt de la couche de nickel de protection, les deux étapes étant séparées par un rinçage à l'eau de la surface intérieure du tube dans la zone de revêtement.

Généralement, dans le cas de traversées de fond de cuve dont le diamètre intérieur est de l'ordre de 15mm, on dépose sur la surface intérieure de la traversée, une couche de protection en nickel d'une épaisseur de l'ordre de 0,1 mm.

Ce dépôt est réalisé en une durée un peu supérieure à 20 mn.

On réalise ensuite un desserrage des joints en relâchant la pression de l'azote dans les circuits des vérins de serrage des joints.

Les pièces de serrage sont éloignées l'une de l'autre sous l'effet des ressorts de rappel. Les joints qui ne sont plus comprimés dans la direction axiale reprennent leur diamètre initial qui est inférieur au diamètre intérieur de la traversée.

Le dispositif est revenu dans sa configuration représentée sur la figure 6C.

On envoie alors de l'eau sous pression dans le circuit de circulation de l'électrolyte, de sorte que l'eau est éjectée par les ouvertures traversant l'électrode 40, dans l'alésage de la traversée 6. On réalise ainsi le rinçage de la zone traitée, de l'alésage du tube 6 et du tube de guidage 7.

L'eau de rinçage est récupérée dans la salle d'instrumentation.

On commande alors le déplacement de la platine 27 vers le haut, de manière à remonter la canne 25 jusque dans sa position représentée sur la figure 6B.

Comme représenté sur la figure 6E, la canne 25 portée par la perche 14 peut être déplacée pour venir à l'aplomb d'une traversée 6' différente de la traversée 6, dans laquelle on doit réaliser une opération de traitement par revêtement électrolytique.

La couche de nickel déposée sur la surface intérieur du tube de traversée 6 a permis de colmater les fissures ou amorces de fissure éventuellement présentes sur cette surface, dans la zone traitée qui se trouve ainsi réparée.

En outre, la couche de nickel permet d'isoler la surface intérieure du tube de traversée, si bien qu'après le redémarrage du réacteur, la surface intérieure de la traversée ne vient plus en contact avec l'eau sous pression de refroidissement du réacteur, dans la zone revêtue.

On peut déposer, à titre préventif, une couche de nickel de protection dans tous les tubes de traversée du fond 3a de la cuve, dans la zone la plus susceptible de subir une fissuration, c'est-à-dire dans la zone de la soudure des tubes sur le fond de cuve.

Un tel traitement préventif permet d'éviter l'apparition ou l'évolution de fissures dans les zones proches des soudures des tubes de traversée, pendant le fonctionnement du réacteur.

La couche de nickel déposée sur la surface intérieure du tube de traversée destinée à venir en contact avec l'eau sous pression du réacteur est exempte de défaut et de contrainte, si bien qu'elle est pratiquement insensible à la corrosion par le fluide primaire du réacteur.

Le procédé suivant l'invention permet donc de substituter à une couche de métal présentant des contraintes et des défauts créés par le soudage des tubes de traversée, une couche vierge exempte de défaut, produite par électrolyse.

En outre, la couche de nickel électrolytique résiste bien à l'abrasion due au frottement du doigt de gant lors de l'extraction ou de la remise en place de la sonde dans le coeur.

Le procédé de l'invention permet donc de réaliser une réparation ou un traitement préventif efficace à l'intérieur des tubes de traversée d'un fond de cuve d'un réacteur nucléaire à eau sous pression, de façon à accroître la sûreté du réacteur nucléaire et à allonger sa durée de vie.

L'invention ne se limite pas au mode de réalisation qui a été décrit.

C'est ainsi qu'on peut réaliser le dépôt par électrolyse d'un métal différent du nickel, dans le cas de tubes de traversée qui seraient constitués par un alliage différent d'un alliage de nickel.

Dans tous les cas, on choisira un métal compatible avec le métal du tube de traversée et qui puisse être déposé sous la forme d'une couche homogène, par un traitement d'électrolyse.

Il est bien évident qu'on peut réaliser un traitement préalable de la surface intérieure du tube, avant le revêtement électrolytique, ce traitement préalable pouvant être un brossage, un usinage, un décapage ou un polissage électrolytique ou une combinaison quelconque de ces traitements.

L'invention peut être mise en oeuvre en utilisant des moyens différents de ceux qui ont été décrits, en particulier en utilisant une canne présentant une structure et par exemple des moyens de gonflage des joints différents de ceux qui ont été décrits.

On peut effectuer le traitement sans soufflage préalable d'un gaz neutre pour chasser l'eau présente dans le tube de traversée, le serrage des joints étant réalisé immédiatement après l'introduction de la canne dans le tube de traversée rempli d'eau. L'eau contenue dans l'espace de traitement entre les joints est alors évacuée par le circuit de circulation de l'électrolyte.

Le procédé et le dispositif de l'invention s'appliquent à la réparation ou à la protection de tout tube de traversée du fond de la cuve d'un réacteur nucléaire refroidi par de l'eau sous pression.

## Revendications

1. Procédé de réparation et de protection contre la fissuration de la paroi interne d'un tube (6) de traversée du fond (3a) d'une cuve (3) d'un réacteur nucléaire à eau sous pression, la cuve (3) de forme générale cylindrique étant disposée avec son axe vertical dans un puits de cuve (2) débouchant par son extrémité supérieure dans une piscine (4) et comportant un couvercle et un fond bombé (3a) traversé par une pluralité de tubes (6) sensiblement verticaux reliés chacun à une salle d'instrumentation (5) du réacteur, par un conduit de mesure (7) assurant le passage d'une sonde de mesure à l'intérieur du coeur (8) du réacteur qui est disposé dans la cuve (3), caractérisé par le fait que, pendant une période d'arrêt du réacteur nucléaire, le couvercle de la cuve (3) ainsi que les équipements internes supérieurs et inférieurs de la cuve étant démontés et la cuve (3) et la piscine (4) étant remplies d'eau, on réalise depuis le niveau supérieur (11) de la piscine (4) et sous eau,
- la mise en place d'une perche (14) comportant suivant sa longueur un conduit de guidage (15) et, à l'une de ses extrémités, un embout (16), dans une disposition verticale à l'intérieur de la cuve (3) de manière que l'embout (16) vienne reposer sur l'extrémité supérieure du tube (6) de traversée du fond de cuve (3a), le conduit de guidage (15) se trouvant dans le prolongement axial du tube de traversée (6) du fond de cuve (3a),
- l'introduction d'une canne de revêtement électrolytique (25) reliée par l'intermédiaire d'un ensemble de conduits et de câbles d'alimentation (24) à un module d'électrolyse (30) et comprenant une électrode tubulaire (40) intercalée entre deux joints d'étanchéité (39, 42) expansibles radialement et commandés à distance, à l'intérieur du tube de traversée (6), par l'intermédiaire du conduit de guidage (15) et de l'embout (16), jusqu'à une zone d'intervention à l'intérieur du tube de traversée (6), ayant une longueur et une position définie dans le tube de traversée (6),
- l'isolation de la zone d'intervention à l'intérieur du tube (6) par expansion des joints d'étanchéité (39, 42) de la canne de revêtement électrolytique (20) expansibles commandés à distance,
- le remplissage par un électrolyte de la zone isolée, et
- l'alimentation de l'électrode tubulaire (40) en courant électrique pour faire passer le courant d'électrolyse à travers l'électrolyte et déposer une couche métallique de revêtement électrolytique sur la surface interne du tube (6) dans la zone isolée.

2. Procédé suivant la revendication 1, caractérisé par le fait que l'électrolyte est mis en circulation dans la zone isolée à l'intérieur du tube de traversée (6).

3. Procédé suivant l'une quelconque des revendications 1 et 2, pour le revêtement d'un tube de traversée en alliage de nickel, caractérisé par le fait que la couche métallique de revêtement électrolytique de la surface interne du tube de traversée (6) est constituée par du nickel.

4. Procédé suivant la revendication 3, caractérisé par le fait que le produit actif de l'électrolyte est constitué par du sulfamate de nickel.

5. Procédé suivant l'une quelconque des revendications 3 et 4, caractérisé par le fait que le revêtement électrolytique est poursuivi pendant une durée suffisante pour obtenir une couche métallique de revêtement de nickel sur la surface interne du tube de traversée (6), d'une épaisseur d'environ 0,1 mm.

6. Procédé suivant l'une quelconque des revendications 1 à 5, caractérisé par le fait que la surface interne du tube de traversée (6) dans la zone isolée comporte au moins une fissure dont on réalise la réparation par revêtement électrolytique.

7. Procédé suivant l'une quelconque des revendications 1 à 6, caractérisé par le fait qu'avant de réaliser l'isolation de la zone interne du tube de traversée (6), on réalise un soufflage par un gaz inerte à l'intérieur du tube de traversée (6), afin de chasser l'eau se trouvant dans l'alésage du tube (6).

8. Procédé suivant l'une quelconque des revendications 1 à 7, caractérisé par le fait qu'avant de réaliser un revêtement électrolytique sur la surface interne du tube de traversée (6), on réalise un brossage de la surface interne du tube de traversée (6), dans la zone destinée à recevoir le revêtement électrolytique.

9. Dispositif de réparation et de protection contre la fissuration de la paroi interne d'un tube de traversée (6) du fond (3a) d'une cuve (3) d'un réacteur nucléaire à eau sous pression, la cuve (3) de forme générale cylindrique étant disposée avec son axe vertical dans un puits de cuve (2) débouchant par son extrémité supérieure dans une piscine (4) et comportant un couvercle et un fond bombé (3a) traversé par une pluralité de tubes (6) sensiblement verticaux reliés chacun à une salle d'instrumentation (5) du réacteur, par un conduit de mesure (7) assurant le passage d'une sonde de mesure à l'intérieur du coeur du réacteur qui est disposé dans la cuve (3), caractérisé par le fait qu'il comporte :
- un moyen (13) de levage mobile sur une plateforme horizontale au-dessus du niveau supérieur (11) de la piscine (4) du réacteur,
- une perche (14) de grande longueur fixée par sa partie supérieure, dans une disposition verticale, sur le moyen de levage et de manutention (13),
- un embout (16) d'introduction et de guidage fixé à l'extrémité inférieure de la perche (14),
- un conduit de guidage (15) fixé suivant la longueur de la perche (14), dans le prolongement et au-dessus de l'embout (16),
- une canne de revêtement électrolytique (25) reliée par l'intermédiaire d'un ensemble de conduits et de câbles d'alimentation (24) à un module d'électrolyse (30) comportant des groupes (20) de pompage d'électrolyte et des moyens d'alimentation (19) en courant électrique pour l'alimentation de la canne (25) qui comportent une électrode tubulaire (40) intercalée entre deux joints d'étanchéité (39, 42) expansibles radialement associés à des dispositifs de serrage commandés à distance par un circuit de fluide, et
- une platine (27) de fixation et de déplacement de la canne (25) mobile suivant la direction longitudinale verticale de la perche (14).

10. Dispositif suivant la revendication 9, caractérisé par le fait que la canne d'électrolyse (25) comporte une partie rigide comportant l'électrode (40) et une partie souple (33) reliant l'électrode (40) au conduit (24) d'alimentation en fluide et en courant électrique.

11. Dispositif suivant la revendication 10, caractérisé par le fait qu'une butée de réglage (34) de la position de l'électrode (40) à l'intérieur du tube de traversée (6) est fixée de manière réglable dans la direction axiale sur la partie souple (33) de la canne d'électrolyse (25), de manière à venir reposer sur une partie d'extrémité supérieure (6a) de la traversée (6) lors de la mise en place de la canne (25) à l'intérieur du tube (6).

12. Dispositif suivant la revendication 11, caractérisé par le fait que la butée (34) comporte un joint d'étanchéité (35), la butée (34) venant en appui sur l'extrémité du tube de traversée (6) par l'intermédiaire du joint d'étanchéité (35).

13. Dispositif suivant l'une quelconque des revendications 10 à 12, caractérisé par le fait qu'il comporte de plus un dispositif enrouleur (22) et un dispositif accumulateur (23) du conduit d'alimentation (24) fixé à la canne de l'électrolyse (25), l'enrouleur (22) et l'accumulateur (23) étant fixés sur le moyen de levage et de manutention (13) circulant au niveau supérieur (11) de la piscine (4).

## Patentansprüche

1. Verfahren zur Ausbesserung der und zum Schutz vor Rissigkeiten der Innenwand eines Rohres (6), das eine Durchführung des Bodens (3a) eines Druckbehälters (3) eines Druckwasser-Kernreaktors bildet, wobei der Druckbehälter (3) mit insgesamt zylindrischer Form mit seiner Achse vertikal in dem Druckbehälterschacht (2) angeordnet ist, der mit seinem oberen Ende in ein Reaktorbecken (4) einmündet und einen gewölbten Deckel und Boden (3a) aufweist, der durch eine Vielzahl von im wesentlichen vertikalen Rohren (6) durchsetzt ist, die mit einem Kontrollgeräteraum (5) des Reaktors durch je eine Meßleitung (7) verbunden sind, die den Durchtritt einer Meßsonde zum Inneren des Kerns (8) des Reaktors sicherstellt, der im Druckbehälter (3) angeordnet ist, dadurch **gekennzeichnet**, daß man, während einer Abschaltperiode des Kernreaktors, in der der Deckel des Druckbehälters (3) sowie die inneren oberen und unteren Anlagenteile des Druckbehälters ausgebaut sind und der Druckbehälter (3) und das Becken (4) mit Wasser gefüllt sind, man vom oberen Niveau (11) des Druckbehälters (4) aus und unter Wasser
- eine Stange (14) anordnet, die längs ihrer Längenerstreckung eine Führungsleitung (15) und am einen ihrer Enden ein Ansatzstück (16) in einer vertikalen Anordnung im Inneren des Druckbehälters (3) derart aufweist, daß das Ansatzstück (16) auf dem oberen Ende des Rohres (6) aufsitzt, das eine Durchführung des Bodens des Druckbehälters (3a) bildet, wobei sich die Führungsleitung (15) in der axialen Verlängerung des Rohres (6) befindet, das eine Durchführung des Bodens des Druckbehälters (3a) bildet,
- eine Rohrsonde (25) für eine elektrolytische Beschichtung, die mittels einer Gruppe von Speiseleitungen und -kabeln (24) mit einem Elektrolysemodul (30) verbunden ist und eine rohrförmige Elektrode (40) aufweist, die zwischen zwei Dichtungen (39, 42) angeordnet ist, in das Innere des Durchführungsrohres (6) mittels der Führungsleitung (15) und des Ansatzstücks (16) bis zu einer Eingriffszone im Inneren des Durchführungsrohrs (6) einführt, die eine definierte Länge und Lage im Durchführungsrohr (6) aufweist,
- die Eingriffszone im Inneren des Rohres (6) durch Aufweiten der ferngesteuerten, aufweitbaren Dichtungen (39, 42) der Rohrsonde (20) für die elektrolytische Beschichtung isoliert,
- die isolierte Zone mit einem Elektrolyt füllt, und
- die rohrförmige Elektrode (40) mit einem elektrischen Strom speist, um den elektrischen Strom durch das Elektrolyt hindurchströmen zu lassen und eine elektrolytische Beschichtungslage aus Metall auf der Innenoberfläche des Rohres (6) der isolierten Zone niederzuschlagen.

2. Verfahren nach Anspruch 1, dadurch **gekennzeichnet**, daß das Elektrolyt in der isolierten Zone im Inneren des Durchführungsrohres (6) in Umlauf versetzt wird.

3. Verfahren nach irgendeinem der Ansprüche 1 und 2 für die Beschichtung eines Durchführungsrohres aus einer Nickellegierung, dadurch **gekennzeichnet**, daß die elektrolytische Beschichtungslage aus Metall der Innenoberfläche des Durchführungsrohres (6) aus Nickel gebildet ist.

4. Verfahren nach Anspruch 3, dadurch **gekennzeichnet**, daß das aktive Produkt des Elektrolyts von Nikkelsulfamat gebildet ist.

5. Verfahren nach irgendeinem der Ansprüche 3 und 4, dadurch **gekennzeichnet**, daß man die elektrolytische Beschichtung während einer Zeitdauer vornimmt, die ausreicht, um eine Metall-Beschichtungslage aus Nickel auf der Innenoberfläche des Durchführungsrohres (6) mit einer Dicke von etwa 0,1 mm zu erzielen.

6. Verfahren nach irgendeinem der Ansprüche 1 bis 5, dadurch **gekennzeichnet**, daß die Innenoberfläche des Durchführungsrohres (6) in der Isolierzone mindestens einen Riß aufweist, dessen Ausbesserung man durch elektrolytische Beschichtung vornimmt.

7. Verfahren nach irgendeinem der Ansprüche 1 bis 6, dadurch **gekennzeichnet**, daß man vor dem Isolieren der inneren Zone des Durchführungsrohres (6) das Innere des Durchführungsrohres (6) mit einem Inertgas durchbläst, um das Wasser herauszutreiben, das sich in der Bohrung des Rohres (6) befindet.

8. Verfahren nach irgendeinem der Ansprüche 1 bis 7, dadurch **gekennzeichnet**, daß man vor der Bildung einer elektrolytischen Beschichtung auf der Innenoberfläche des Durchführungsrohres (6) die Innenoberfläche des Durchführungsrohres (6) in der Zone durchbürstet, die dazu bestimmt ist, die elektrolytische Beschichtung aufzunehmen.

9. Vorrichtung zur Ausbesserung der und zum Schutz vor Rissigkeit der Innenwand eines Rohres (6), das eine Durchführung des Bodens (3a) eines Druckbehälters (3) eines Druckwasser-Kernreaktors bildet, wobei der Druckbehälter (3) mit insgesamt zylindrischer Form mit seiner vertikalen Achse in einem Druckbehälterschacht (2) angeordnet ist, der mit seinem oberen Ende in ein Becken (4) einmündet und einen gewölbten Deckel und Boden (3a) aufweist, der durch eine Vielzahl von im wesentlichen vertikalen Rohren (6) durchsetzt ist, die jeweils mit einem Kontrollgeräteraum (5) des Reaktors durch eine Meßleitung (7) verbunden sind, die den Durchtritt einer Meßsonde zum Inneren des Reaktorkernes gestattet, der im Druckbehälter (3) angeordnet ist, dadurch **gekennzeichnet**, daß sie die folgenden Merkmale aufweist:
- eine mobile Hebeeinrichtung (13) auf einer horizontal Plattform über dem oberen Niveau (11) des Reaktorbeckens (4),
- eine Stange (14) mit großer Länge, die mit ihrem oberen Teil in vertikaler Anordnung an der Hebe- und Wartungseinrichtung (13) befestigt ist,
- ein Einführungs- und Führungsansatzstück (16), das am unteren Ende der Stange (14) befestigt ist,
- eine Führungsleitung (15), die längs der Längenerstreckung der Stange (14) in der Verlängerung und über dem Ansatzstück (16) befestigt ist,
- eine Rohrsonde (25) für die elektrolytische Beschichtung, die mittels einer Gruppe (24) aus Speiseleitungen und -kabeln mit einem Elektrolysemodul (30) verbunden ist, das Elektrolyt-Pumpanordnungen (20) und Mittel (19) zur Einspeisung von elektrischem Strom für die Einspeisung der Rohrsonde (25) aufweist, mit einer rohrförmigen Elektrode (40), die zwischen zwei radial aufweitbaren Dichtungen (39, 42) angeordnet ist, die Klemmvorrichtungen zugeordnet sind, die durch einen Strömungsmittelumlauf ferngesteuert sind, und
- eine Platte (27) zur Befestigung und Verschiebung der Rohrsonde (25), die in der vertikalen Längsrichtung der Stange (14) beweglich ist.

10. Vorrichtung nach Anspruch 9, dadurch **gekennzeichnet**, daß die Elektrolyse-Rohrsonde (25) einen starren Teil aufweist, der die Elektrode (40) aufweist, und einen nachgiebigen Teil (33), der die Elektrode (40) mit der Speiseleitung (24) für Strömungsmittel und elektrischen Strom verbindet.

11. Vorrichtung nach Anspruch 10, dadurch **gekennzeichnet**, daß ein Einstellanschlag (34) für die Lage der Elektrode (40) im Inneren des Durchführungsrohres (6) in axialer Richtung einstellbar auf dem nachgiebigen Teil (33) der Elektrolyse-Rohrsonde (25) derart befestigt ist, daß er auf dem oberen Endteil (6a) der Durchführung (6) während des Einsetzens der Rohrsonde (25) im Inneren des Rohres (6) aufsitzt.

12. Vorrichtung nach Anspruch 11, dadurch **gekennzeichnet**, daß der Anschlag (34) eine Dichtung (35) aufweist, wobei der Anschlag (34) auf dem Ende des Durchführungsrohres (6) unter Zwischenschaltung der Dichtung (35) zur Anlage kommt.

13. Vorrichtung nach irgendeinem der Ansprüche 10 bis 12, dadurch **gekennzeichnet**, daß sie außerdem eine Rollenvorrichtung (22) und eine Speichervorrichtung (23) für die Einspeiseleitung (24) aufweist, die an der Elektrolyse-Rohrsonde (25) befestigt ist, wobei die Aufrollvorrichtung (22) und die Speichervorrichtung (22) auf der Hebe- und Wartungseinrichtung (13) befestigt sind, die auf dem oberen Niveau (11) des Beckens (4) umläuft.

## Claims

1. Method for the repair and protection against cracking of the internal wall of a through tube (6) of the base (3a) of a vessel (3) of a pressurized-water nuclear reactor, the generally cylindrical vessel (3) being disposed with its axis vertical in a vessel well (2) with its upper end opening in a tank (4), and including a cover and a rounded base (3a) through which a plurality of substantially vertical tubes (6) extends, each tube being connected to an instrument room (5) of the reactor by a measurement conduit (7) for the passage of a measurement probe into the core (8) of the reactor which is disposed in the vessel (3), characterized in that, during a shutdown period of the nuclear reactor, when the cover of the vessel (3) as well as the upper and lower internal equipment of the vessel (3) have been removed and the vessel (3) and the tank (4) are filled with water, the following steps are carried out from the top (11) of the tank (4) and under water,
- the positioning of a pole (14), including a guide conduit (15) along its length and a joining piece (16) at one of its ends, in a vertical arrangement inside the vessel (3) so that the joining piece (16) comes to rest on the upper end of the through tube (6) of the base of the vessel (3a), the guide conduit (15) being disposed as an axial extension of the through tube (6) of the base (3a) of the vessel,
- the introduction of an electrolytic coating rod (25) connected to an electrolysis module (30) by means of a set of supply cables and conduits (24) and comprising a tubular electrode (40) inserted between two remote-controlled, radially expandable, seals (39, 42), into the through tube (6), by means of the guide conduit (15) and of the joining piece (16), as far an operating region inside the through tube (6), having a defined length and position in the through tube (6),
- the isolation of the operating region inside the tube (6) by the expansion of the remote-controlled,expandable seals (39, 42) of the electrolytic coating rod (20),
- the filling of the isolated region with an electrolyte, and
- the supply of electric current to the tubular electrode (40) in order to cause the electrolysis current to flow through the electrolyte and to deposit a metallic electrolytic coating layer on the internal surface of the tube (6) in the isolated region.

2. Method according to Claim 1, characterized in that the electrolyte is circulated in the isolated region inside the through tube (6).

3. Method according to any one of Claims 1 and 2, for the coating of a through tube made of nickel alloy, characterized in that the metallic electrolytic layer coating the internal surface of the through tube (6) is made of nickel.

4. Method according to Claim 3, characterized in that the active agent of the electrolyte is constituted by nickel sulphamate.

5. Method according to any one of Claims 3 and 4, characterized in that the electrolytic coating is continued for a period long enough to produce a metallic coating layer of nickel on the internal surface of the through tube (6) with a thickness of about 0.1 mm.

6. Method according to any one of Claims 1 to 5, characterized in that the internal surface of the through tube (6) in the isolated region includes at least one crack which is repaired by electrolytic coating.

7. Method according to any one of Claims 1 to 6, characterized in that, before the region inside the through tube (6) is isolated, inert gas is blown into the through tube (6) in order to flush out the water disposed in the bore of the tube (6).

8. Method according to any one of Claims 1 to 7, characterized in that, before an electrolytic coating is formed on the internal surface of the through tube (6), the internal surface of the through tube (6) is brushed in the region which is intended to receive the electrolytic coating.

9. Device for the repair and protection against cracking of the internal wall of a through tube (6) of the base (3a) of a vessel (3) of a pressurized-water nuclear reactor, the generally cylindrical vessel (3) being disposed with its axis vertical in a vessel well (2), with its upper end opening in a tank (4), and including a cover and a rounded base (3a) through which a plurality of substantially vertical tubes (6) extends, each tube being connected to an instrument room (5) of the reactor by a measurement conduit (7) for the passage of a measurement probe into the core of the reactor which is disposed in the vessel (3), characterized in that it comprises:
- a lifting means (13) movable on a horizontal platform above the top (11) of the tank (4) of the reactor,
- a long pole (14) fixed by its upper portion in a vertical arrangement on the lifting and handling means (13),
- an insertion and guiding joining piece (16) fixed to the lower end of the pole (14),
- a guide conduit (15) fixed along the length of the pole (14) as an extension of and above the joining piece (16),
- an electrolytic coating rod (25) connected by means of a set of supply cables and conduits (24) to an electrolysis module (30) including electrolyte pumping units (20) and electric-current supply means (19) for supplying the rod (25), which includes a tubular electrode (40) inserted between two radially expandable seals (39, 42) associated with tightening devices controlled remotely by a fluid circuit, and
- a plate (27) for the fixing of the movable rod (25) and for its vertical displacement longitudinally of the pole (14).

10. Device according to Claim 9, characterized in that the electrolysis rod (25) includes a rigid portion including the electrode (40) and a flexible portion (33) connecting the electrode (40) to the fluid and electric-current supply conduit (24).

11. Device according to Claim 10, characterized in that an abutment (34) for regulating the position of the electrode (40) inside the through tube (6) is fixed in an axially adjustable manner on the flexible portion (33) of the electrolysis rod (25) so as to rest on an upper end portion (6a) of the through tube (6) when the rod (25) is positioned inside the tube (6).

12. Device according to Claim 11, characterized in that the abutment (34) includes a seal (35), the abutment (34) bearing on the end of the through tube (6) by means of the seal (35).

13. Device according to any one of Claims 10 to 12, characterized in that it also includes a winding device (22) and a storage device (23) for the supply conduit (24) fixed to the electrolysis rod (25), the winding device (22) and the storage device (23) being fixed to the lifting and handling means (13) running at the top (11) of the tank (4).
